# EUROPEAN PATENT APPLICATION

(11) **EP 1 686 099 A1**
(43) Date of publication of application: **02.08.2006**
(21) Application number: 04793771.9
(22) Date of filing: 20.10.2004
(51) Int. Cl.: C03C 11/00, C03B 19/08

(54) **RAW MIXTURE FOR PRODUCING FOAM GLASS AND METHODS FOR PRODUCING SAID RAW MIXTURE, BATCH AND FOAM GLASS**

(30) Priority: 20.11.2003 RU 2003133693; 20.11.2003 RU 2003133694; 01.12.2003 RU 2003134604
(71) Applicant: Zinoviev, Andrei Adolfovich, Vladimir, 600017 (RU); Dudko, Mikhail Petrovich, Moscow, 117292 (RU); Leonidov, Valentin Zinovievich, Moscow, 117335 (RU)
(72) Inventor: Zinoviev, Andrei Adolfovich, Vladimir, 600017 (RU); Dudko, Mikhail Petrovich, Moscow, 117292 (RU); Leonidov, Valentin Zinovievich, Moscow, 117335 (RU)
(74) Representative: Winkler, Andreas Fritz Ernst
(86) International application number: PCT/RU2004/000415
(87) International publication number: WO 2005/049518

(57) **Abstract**

The present invention relates to the production of construction materials with low conductivity and density characteristics, particularly to the production of block foamed glass from processed cullet irrespective of the chemical composition of the latter. The method of the invention makes it possible to produce high-quality foamed glass with low labor and power inputs. This is achieved by using, when preparing the feedstock mixture, an aqueous alkaline solution of sodium silicate and/or potassium silicate in an amount of at least 30 to 70 weight % and powdered cullet having an arbitrary chemical composition in an amount within the range of 25 to 65 weight %. The obtained dehydrated feedstock mixture after heat treating at a temperature of 450 to 550°C is ground into a powdered batch which is heated to a foaming temperature within the range of 750 to 830°C.

## Description

### BACKGROUND OF THE INVENTION

### Field of the Invention

The present invention relates to the production of construction materials with low conductivity and density characteristics, particularly to the production of a feedstock mixture and methods for preparing a feedstock mixture, a batch, and for producing block foamed glass used as an effective heat insulating material in various building structures. The invention can be used in producing foamed glass having a closed-pore texture from processed cullet irrespective of the chemical composition of the latter.

### Description of the Prior Art

Among construction materials with good heat and sound insulating characteristics foamed glass is noted for small bulk weight, low thermal conductivity and high sound absorption; this is a non-combustible, heat-resistant and chemically stable material. Foamed glass is a light-weight porous material produced by sintering and foaming at high temperatures a mixture of powdered starting glass or other glass-like materials with foaming agents (finely ground limestone, chalk, carbon black, coke). It is established that the volume density, thermal insulation and mechanical properties of foamed glass are the best for the foamed glass in the structure of which closed pores prevail, i.e., closed cavities not communicating with one another, separated by material interlayers. The presence of closed pores in the structure of foamed glass makes products manufactured therefrom impermeable for liquids, including water, water vapors and gases.

Practice shows that one of decisive factors which affect the process of producing high-quality foamed glass is the feedstock mixture for manufacturing thereof, because the physicochemical structure of foamed glass, which determines its thermal and mechanical properties depend on the mixture composition.

Foamed glass can be manufactured by many methods, using compositions based on various kinds of glass and foaming agents. Glass is usually used in the form of a glass powder. Glass powder is produced either from specially prepared glass melts (US 4192664, Cl. C03B 19/00, 1980, US 3403990, Cl. 65-22, 1968) or from cullet of pane glass, container glass, optical glass, and other glasses (US 4198224, Cl. C30B 19/08, 1980). An analysis of the literature data shows that the production of foamed glass is widely spread, wherein a specially molten and granulated glass is used, with expensive ingredients being employed for improving the properties thereof (WO 00/61512, Cl. C03C 11/00, C03B 19/08, 2000, DE 2010263, C03C 11/00, 1979).

For a long time use has been made of the feedstock mixture according to US 3151966, Cl. 65-22, 1966, prepared by mixing finely ground glass and a foaming agent which contains a reducing agent in the form of a carbonaceous ingredient and an oxidizing agent selected from sulfates, oxides and other chemical agents. Though the use of the known feedstock mixture makes it possible to produce foamed glass of sufficiently high quality with a homogeneous structure providing its operational stability, but the use of the known feedstock is limited by the high cost, since the process of preparing thereof is labor-intensive, involving such additional operations as grinding, sintering, stabilizing.

Conventional technology of producing foamed glass comprises melting glass having a special composition, grinding this glass with a foaming agent for preparing a finely dispersed batch, foaming the formed batch in the course of annealing at a temperature of at least 700°C. The use of the known technology makes it possible to produce foamed glass of sufficiently high quality with a homogeneous structure providing its operational stability, but such foamed glass has a high prime cost, because the operation of producing foamed glass having a required composition is highly labor-intensive.

It is known that for producing foamed glass with constant physical properties (volume density smaller than 280 kg/m³, water absorption less than 5% and relatively ordered structure) technologies are developed, adapted to the starting glass of a strictly definite composition. For this very reason the choice of the feedstock is of great importance. The feedstock for producing foamed glass must be suitable with taking into account the cost price of its production, for which purpose attention is paid to the glass foaming time and temperature.

In US 4198224, Cl. C03B 19/08, 1980 a process for producing foamed glass from cullet is disclosed, which comprises heating a powdered batch to a foaming temperature, maintaining thereof at this temperature to completion of the foaming process, and subsequent cooling. The foamed glass manufactured by Pittsburg Coming Corporation is produced from a finely dispersed glass powder and a foaming agent. The batch for manufacturing foamed glass is prepared from glass subject to utilization (so-called cullet). Glass having a strictly definite composition and a foaming agent, both in a solid phase, are thoroughly ground and intermixed in a ball mill to an average particle size of 3 to 10 µm. Grinding of the components is carried out separately and in several steps: first, the glass and the foaming agent are ground separately, then they are ground together. The finely dispersed components of the feedstock mixture are intermixed in the solid phase. The resulting powdered mixture is then sintered in two steps at a temperature below the foaming temperature and then cooled. Unfortunately, the known process is complicated, since it requires intermixing the starting components in the solid-phase state, which does not ensure their high level of distribution homogeneity in the mixture volume. Besides, grinding in ball mills with metallic balls leads to the contamination of the mixture with the metal of the balls and lining, which, as was already indicated above, later on disturbs the pore formation conditions in the step of foamed glass production. Unfortunately, under the conditions of price hike for energy carriers, the use of the known powdered batch and of the process for preparing thereof leads to the rise in the cost of foamed glass. This situation imposes limitations on the choice of the composition subject to foaming.

Known from RU 2109700, Cl. C03C 11/00, 1998 is a technology for manufacturing granulated foamed glass on the basis of wastes resulting from glass production, by preparing a powdered batch from broken glass and a gas-forming agent. WO 00/61512, Cl. C03C 11/00, 2000 discloses a method for producing granulated foamed glass with the use of glass wastes, wherein the granulate undergoes one- or two-step treatment at a temperature of from 200 to 300°C or from 400 to 800°C for a period of time not exceeding 15 minutes.

Sodium silicate or so-called liquid glass is known sufficiently well as an additive in the manufacture of foamed glass, necessary as a binder for granules (see, e.g., DE 2010263, Cl. C03C 11/00, 1979). RU 2162825, Cl. C03C 11/00, 2001 discloses a method of producing cellular glass from graded cullet having a definite composition, comprising preparing a batch by combined grinding the cullet and a carbonate foaming agent, granulating the batch with sprinkling thereof with an aqueous solution of soluble glass, drying the granules and heat treatment thereof at a foaming temperature of 780 to 820°C, followed by annealing.

The art most relevant to the present invention in terms of the technical essence and the attainable result is a method of manufacturing expanded glass, comprising preliminary heat treatment at a temperature below the foaming temperature of a feedstock mixture prepared from a finely dispersed cullet powder, a carbon-containing component and sodium silicate, heating the mixture to the foaming temperature, maintaining at this temperature till the expansion process is completed, followed by cooling (RU 2187473, Cl. C03B 19/08, 2000). The known method makes it possible to produce quality block expanded glass on the basis of alkali aluminosilicates vitreous wastes. In the known method the dispersed cullet is intermixed with the expanding mixture containing silica, a carbon-containing component, a metal sulfate and liquid sodium glass in an amount of from 0.5 to 5.0 weight %. Then the resulting mixture is first subjected to caking, then foamed at a temperature of 790 to 860°C, and thereafter tempering and annealing are carried out. The expanding additive is prepared by intermixing silica, sodium glass in dry or water-wetted state, carbon black, sulfate and boric acid. The obtained mixture is subjected to granulation in the presence of liquid glass for enhancing the agglomeration of the material into granules. For enhancing the granulation of the material, the mixture is wetted, if sodium glass is introduced as a dry powder. The granulated material is loaded into metallic molds and transferred into a furnace for caking, foaming and annealing. The foamed glass produced in accordance with the known technology is characterized by high prime cost associated with the necessity of prolonged and sufficiently complicated intermixing of the components to a very uniform distribution of the foaming agent particles in the glass powder. Besides, grinding in ball mills with metallic balls leads to the contamination of the batch with the metal of the balls and lining, which later on disturbs the pore formation conditions in the batch subjected to caking. This, in turn, tells on the stability, uniformity and reproducibility of the structure of closed pores of the foamed glass. The uniformity factor of such foamed glass is not sufficiently high. The operating conditions of the known method were developed for a particular composition of cullet, and this makes them inapplicable if cullet of an arbitrary composition is used. The instability and complexity of the cullet composition, conditioned by the dependence on the functional purpose of the produced technical glass, the composition of the starting ingredients and on the glass melting schedule lead to the instability of the properties of the foamed glass produced therefrom as well.

### Summary of the Invention

Within the framework of the present Application it is an object of the invention to broaden the source of stock materials and provide such technology which would allow producing foamed glass irrespective of the chemical composition of cullet, i.e., from ungraded cullet and with small energy intensity of the production process. There is a need of developing a method for producing foamed glass with the use of technical glasses of different chemical composition: broken pane glass, container glass, chemical ware glass, and mixtures thereof in different proportions. Another object is to enhance the reproducibility of the foamed glass structure with a homogeneous fine-pored texture containing closed pores.

The posed problem is solved by that a feedstock mixture for producing foamed glass comprises a dehydrated composition as a result of physicochemical interaction at a temperature of from 450 to 550°C of an aqueous alkaline solution of sodium silicate and/or potassium silicate and powdered additives chemically active with respect thereto, said additives containing ungraded cullet and a carbonaceous foaming agent.

The posed problem is solved also by that the method of preparing a feedstock mixture for the production of foamed glass comprises intermixing at a temperature not exceeding 70°C an aqueous alkaline solution of sodium silicate and/or potassium silicate in an amount of from 30 to 70 weight % and powdered additives chemically active with respect to the sodium silicate and potassium silicate, said additives containing ungraded cullet and a carbonaceous foaming agent, heat treatment of the viscous-flow dispersion obtained in the intermixing at a temperature within a range of from 450 to 550°C for a period of time sufficient for removing water, including chemically bound water,. therefrom.

It is expedient to select the ingredients for intermixing from the ratio of the components, in weight %: an aqueous alkaline solution of sodium silicate and/or potassium silicate in an amount of from 30 to 70, powdered ungraded cullet in an amount of from 25 to 65, a carbonaceous foaming agent in an amount of from 4 to 9.

Besides, it is preferable to use an aqueous alkaline solution of sodium silicate and/or potassium silicate with a density of 1.3 to 1.5 g/cm³ and a silica modulus of 2 to 3.5.

The posed problem is solved by that the method of preparing a feedstock mixture for the production of foamed glass comprises intermixing at a temperature not exceeding 70°C an aqueous alkaline solution of sodium silicate and/or potassium silicate in an amount of from 30 to 70 weight % and additives chemically active with respect to the sodium silicate and potassium silicate, said additives containing ungraded cullet and a carbonaceous foaming agent, heat treatment of the viscous-flow dispersion obtained in the intermixing at a temperature of 450 to 550°C till dehydrated composition is obtained, followed by cooling the dehydrated composition and reducing it to powder. For preparing the batch the ingredients to be intermixed are selected from the ratio, in weight %: an aqueous alkaline solution of sodium silicate and/or potassium silicate, from 30 to 70; powdered ungraded cullet, from 25 to 65; a carbon-containing foaming agent, from 4 to 9.

It is preferable to reduce the dehydrated composition to a powder with a grain size not greater than 15 to 20 µm.

The posed problem is solved also by that the method for producing foamed glass comprises intermixing at a temperature not exceeding 70°C an aqueous alkaline solution of sodium silicate and/or potassium silicate in an amount of from 30 to 70 weight % and powdered additives chemically active with respect to the sodium silicate and potassium silicate, said additives containing ungraded cullet and a carbonaceous foaming agent, heat treatment of the viscous-flow dispersion obtained in the intermixing at a temperature of 450 to 550°C till dehydrated composition is obtained, followed by reducing the cooled composition to powder heating the powder to a foaming temperature within a range of from 750 to 830°C, and maintaining it at this temperature till the foaming process is completed, followed by cooling.

It is expedient, when producing foamed glass, to select the ingredients to be intermixed from the ratio, in weight %: an aqueous alkaline solution of sodium silicate and/or potassium silicate, from 30 to 70; powdered ungraded cullet, from 25 to 65; a carbon-containing foaming agent, from 4 to 9.

Since ungraded cullet, i.e., artificial technical glasses, are systems comprising different oxides, the process of the reaction of an aqueous solution of an alkali metal with ungraded cullet required studying its thermodynamic conditions. The cited optimal ratios of the ingredients and temperature conditions were established by the authors experimentally, proceeding from studying the thermodynamic regularities of the process of synthesis of the starting mixture based on an aqueous solution of an alkali metal and ungraded cullet, i.e., of cullet having an arbitrary chemical composition. Sodium silicate and/or potassium silicate dissolved in water to a definite concentration is an alkaline solution required for the course of physicochemical processes accompanying its reaction with the cullet oxides irrespective of their composition, including alkali oxides contained in the glass.

The essence of the invention is in establishing the cause-and-effect relation between the physicochemical properties of foamed glass, the thermodynamic conditions of preparing the feedstock mixture, including the composition of the starting ingredients and the temperature of preparing the mixture, the sequence of intermixing the ingredients, and the mixture heat treatment conditions. In the absence of generally known regularities of the physicochemical state of the substance after its treatment at a foaming temperature and the starting composition in preparing the feedstock mixture, the authors have found those optimal values of the content of the aqueous alkaline solution of sodium silicate and potassium silicate, cullet powder and the carbon-containing foaming agent, which make it possible, after successive intermixing thereof and subsequent treatment at a temperature within a range of from 450 to 550°C to obtain the required parameters of foamed glass. The most acceptable silica modulus of the aqueous solution of an alkali metal silicate is from 2 to 3.5 with the solution density of from 1.3 to 1.5 g/cm³.

In the present method of producing foamed glass the intermixing of the alkali metal silicate, the powder of technical glass having an arbitrary composition and the carbon-containing foaming agent is carried out not in the solid state, but in an aqueous solution of an alkali metal silicate, which comprises a viscous-flow liquid with the medium pH > 7 and is such a component which provides both uniform distribution of the powdered additives within the charge volume and the course of the necessary physicochemical processes during the intermixing and then during heating to a temperature from 450 to 550°C, associated, among other things, with the removal of chemically bound water.. The intermixing of the starting components of the mixture in the liquid phase state without preliminary heating at a temperature not higher than 70°C makes it possible to obtain later on a structure of homogeneous closed gas-filled pores, uniform throughout the volume of foamed glass by a low power-intensity of the production process, irrespective of the chemical composition of technical glass.

The following particular non-limiting example is presented below for illustrating the essence of the invention.

### Example

The starting mixture is prepared from the following components.

The starting component is 150 kg of a commercially available aqueous alkaline solution of sodium silicate and potassium silicate (optimal ratio 1:1) produced at Ryazan Works (liquid glass can also be produced from tripoli by an autocvlave or non-autoclave hydrothermal leaching of silica in an alkaline medium (pH > 7 at a temperature of 90 to 100°C). An aqueous solution of sodium silicate and potassium silicate (optimal ratio 1:1) at an ambient temperature is first intermixed for 10 to 15 minutes with finely ground powder of ungraded cullet of different brands and chemical composition, taken in an amount of 65 kg. This cullet is prepared from broken pane glass, container glass of any color and chemical ware glass in arbitrary proportions with respect to one another. Then, in the course of intermixing the obtained viscous-flow composition, 20 kg of a carbon-containing foaming agent are added. In the course of intermixing the composition there takes place binding of free water and alkali which adversely affect the water solubility of the final product - foamed glass. The resulting mixture is gray colored. After intermixing all the components of the feedstock mixture, the resulting mixture is heat treated at a temperature of 530°C for about 65 minutes. During the heat treatment there take place further physicochemical processes accompanied by the removal of free hydration water and chemically bound water and by an increase of the viscosity of the mixture, whereafter the color of the mixture becomes dark gray. The weight of the feedstock mixture cooled to the ambient temperature is about 60% of the weight of the starting components. Then the mixture is ground to a grain size not larger than 15 to 20 µm. The ground feedstock mixture is loaded into metallic molds treated with a special composition, and heat treated at a foaming temperature of 780 to 830°C for at least 90 minutes.

The results of comparative tests of the foamed glass produced in accordance with the present technology, in comparison with the foamed glass "FOAMGLAS"^{R} manufactured by Pittsburgh Coming Europe Corporation (Belgium) of the density-comparable marks are listed in Table 1.

**Table 1**

| Characteristics | Results of testing the present foamed glass | Results of testing foamed glass "FOAMGLAS"^{R} |
|---|---|---|
| Apparent density, kg/m³ | 218-188 | 253-226 |
| Thermal conductance, W/m K | 0.062-0.065 | 0.072-0.082 |
| Thermal capacity, kJ/kg K | 0.80-0.81 | 0.84-0.89 |
| Hygroscopicity, weight % | 0.3-0.5 | 0.3-0.2 |
| Weight loss after boiling in water for 3 hours, % | 0 | 0 |
| Water absorption, % | 1.2-1.00 | 0.7-0.68 |
| Compression strength at 10% linear deformation, kg/cm² | 1.61-2.7 (16.1-27) | 1.83-2.23 (18.3-22.3) |
| Burning behavior | Does not bum | Does not burn |

A comparative analysis of one of the results of testing the present foamed glass and of the foamed glass "FOAMGLAS"^{R} shows significant coincidence of their properties.

### Industrial Applicability

The present invention can be used in producing foamed glass with reproducible fine-pored texture from cullet having an arbitrary chemical composition. The invention contemplates the use of an aqueous alkaline solution of sodium silicate and/or potassium silicate and additives chemically active with respect thereto, one of said additives being powdered cullet having an arbitrary chemical composition, which make it possible after intermixing thereof with a carbon-containing foaming agent and heat treatment at a temperature of 450 to 550°C to obtain a dehydrated composition suitable for producing foamed glass with high thermophysical characteristics but with low energy intensity of the production process owing to ruling out melting glass having a special chemical composition at high temperatures.

## Claims

1. A feedstock mixture for manufacturing foamed glass, which is a dehydrated composition as a result of physicochemical interaction at a temperature of from 450 to 550°C of an aqueous alkaline solution of sodium silicate and/or potassium silicate and powdered additives chemically active with respect thereto, said additives containing ungraded cullet and a carbonaceous foaming agent.

2. A method for preparing a feedstock mixture for manufacturing foamed glass, comprising intermixing at a temperature not exceeding 70°C an aqueous alkaline solution of sodium silicate and/or potassium silicate in an amount of from 30 to 70 weight % and powdered additives chemically active with respect to the sodium silicate and potassium silicate, said additives containing ungraded cullet and a carbonaceous foaming agent, heat treatment of the viscous-flow dispersion obtained in the intermixing at a temperature within a range of from 450 to 550°C for a period of time sufficient for removing water, including chemically bound water, therefrom.

3. A method according to claim 2, **characterized in that** the ingredients in the intermixing are selected from the ratio, in weight %:
| | |
|---|---|
| aqueous alkaline solution of sodium silicate and/or potassium silicate | 30-70 |
| powdered ungraded cullet | 25-65 |
| carbonaceous foaming agent | 4-9 |

4. A method according to claim 2, **characterized in that** use is made of an aqueous alkaline solution of sodium silicate and/or potassium silicate having a density of from 1.3 to 1.5 g/cm³ with a silica modulus of from 2 to 3.5.

5. A method for preparing a batch for producing foamed glass, comprising intermixing at a temperature not exceeding 70°C an aqueous alkaline solution of sodium silicate and/or potassium silicate in an amount of from 30 to 70 weight % and powdered additives chemically active with respect to the sodium silicate and/or potassium silicate, said additives containing ungraded cullet and a carbonaceous foaming agent, heat treatment of the viscous-flow dispersion obtained in the intermixing at a temperature of 450 to 550°C till dehydrated composition is obtained, followed by cooling the dehydrated composition and reducing it to powder.

6. A method according to claim 5, **characterized in that** the ingredients in the intermixing are selected from the ratio, in weight %:
| | |
|---|---|
| aqueous alkaline solution of sodium silicate and/or potassium silicate | 30-70 |
| powdered ungraded cullet | 25-65 |
| carbonaceous foaming agent | 4-9 |

7. A method according to claim 5, **characterized in that** the dehydrated cooled composition is reduced to powder with a grain size not greater than 15 to 20 µm.

8. A method for producing foamed glass, comprising intermixing at a temperature not exceeding 70°C an aqueous alkaline solution of sodium silicate and/or potassium silicate in an amount of from 30 to 70 weight % and powdered additives chemically active with respect to the sodium silicate and/or potassium silicate, said additives containing ungraded cullet and a carbonaceous foaming agent, heat treatment of the viscous-flow dispersion obtained in the intermixing at a temperature of 450 to 550°C till dehydrated composition is obtained, followed by reducing the cooled composition to powder, heating the powder to a foaming temperature from the range of from 750 to 830°C, and maintaining at this temperature till the foaming process is completed, followed by cooling.

9. A method according to claim 8, **characterized in that** the ingredients in the intermixing are selected from the ratio, in weight %:
| | |
|---|---|
| aqueous alkaline solution of sodium silicate and/or potassium silicate | 30-70 |
| powdered ungraded cullet | 25-65 |
| carbonaceous foaming agent | 4-9 |
